# EUROPÄISCHE PATENTANMELDUNG

(11) **EP 1 746 552 A1**
(43) Veröffentlichungstag der Anmeldung: **24.01.2007**
(21) Anmeldenummer: 05106610.8
(22) Anmeldetag: 19.07.2005
(51) Int. Cl.: G08B 1/08, G08B 17/06, G08B 25/10, G08B 7/06, H04B 11/00

(54) **Bidirektionale Kommunikation zwischen einer akustischen Gefahrenmeldereinheit und mindestens einer weiteren Einheit**

(71) Anmelder: Siemens Schweiz AG, 8047 Zürich (CH)
(72) Erfinder: Tenchio, Georges, 8123, Ebmatingen (CH)
(74) Vertreter: Weise, Wolfgang

(57) **Zusammenfassung**

Die Erfindung beschreibt ein Verfahren, eine Vorrichtung und ein System zur bidirektionalen Kommunikation zwischen einer akustischen Gefahrenmeldereinheit (AGME) und mindestens einer weiteren Einheit (WE) in einem baulich begrenzten Raum. Erfindungsgemäss wird für die bidirektionale Kommunikation eine zu übertragende Information von der akustischen Gefahrenmeldereinheit (AGME) mittels Schallwellen zur mindestens einen weiteren Einheit (WE) und umgekehrt übertragen.

## Beschreibung

Die Erfindung betrifft ein Verfahren, eine Vorrichtung und ein System zur bidirektionalen Kommunikation zwischen einer akustischen Gefahrenmeldereinheit und mindestens einer weiteren Einheit in einem baulich begrenzten Raum.

Akustische Gefahrenmeldereinheiten werden allgemein zum Ausgeben von Alarm-Signalen bei einer Gefahrensituation wie zum Beispiel bei einem Brand, bei einer Gas-Detektion etc. in Gebäuden eingesetzt. Meist besitzen solche Gefahrenmeldereinheiten, wie zum Beispiel aus der EP 1316931 B1 bekannt, eine Piezoscheibe und entsprechende Akustikformen in der Mechanik, damit ein akustisches Signal ausgesandt werden kann. Derartige akustische Gefahrenmeldereinheiten weisen zudem eine Ansteuerung auf, die einen minimalen Stromverbrauch ermöglicht und dabei eine Tonqualität erlaubt, die Sprach- bzw. Musiktauglich ist.

Die Aufgabe der vorliegenden Erfindung ist darin zu sehen, eine möglichst einfache und effiziente Möglichkeit für eine bidirektionale Kommunikation zwischen einer akustischen Gefahrenmeldereinheit und mindestens einer weiteren Einheit vorzuschlagen.

Die Aufgabe wird erfindungsgemäß jeweils durch die Gegenstände der unabhängigen Patentansprüche gelöst. Weiterbildungen der Erfindung sind in den Unteransprüchen angegeben.

Ein Kern der Erfindung ist darin zu sehen, dass für eine bidirektionale Kommunikation eine zu übertragende Information zwischen einer akustischen Gefahrenmeldereinheit und mindestens einer weiteren Einheit in einem baulich begrenzten Raum mittels Schallwellen übertragen wird. Um anwesende Personen nicht zu belästigen, kann die Übertragung mittels Schallwellen im Ultraschallbereich erfolgen. Der Piezoeffekt der dieser Erfindung zugrunde liegt ist grundsätzlich reziprok. Daher kann die gleiche Piezoscheibe im Allgemeinen auch als Mikrofon verwendet werden. Dies bedeutet, dass eine akustischer Gefahrenmeldereinheit bzw. eine weitere Einheit mit einer solchen Piezoscheibe sowohl als Sender als auch als Empfänger verwendet werden kann. Selbstverständlich könnte als akustische Gefahrenmeldereinheit auch ein Lautsprecher verwendet werden. Durch die Verwendung von Lautsprechern kann eine höhere Qualität, die zum Beispiel für Sprache notwendig ist, bereitgestellt werden. Die Größe der Piezoscheibe ist dabei abhängig von den Schallwellen, die ausgesandt bzw. empfangen werden sollen. Damit wird ermöglicht, dass eine akustische Gefahrenmeldereinheit eine bidirektionale Kommunikation durchführen kann, also Information sowohl an mindestens eine weitere Einheit senden als auch von der mindestens einen weiteren Einheit empfangen kann. Als weitere Einheit kann ein Kommunikationsendgerät, ein mobiles Kommunikationsendgerät, eine akustische Gefahrenmeldereinheit, ein Lautsprecher, eine Gefahrenmeldeeinheit, wie zum Beispiel einen Brandmelder, einen Gasmelder, einen Temperaturmelder etc., ein mobiler Schallwellensender und/oder Schallwellenempfänger, eine Gefahrenmeldezentrale, eine optische Anzeigeneinheit etc. verwendet werden. Durch Messung der Schalllaufzeit kann in einer bevorzugten Ausführungsform der Erfindung aber auch die Temperatur berechnet werden, wenn die Distanz zur weiteren Einheit bekannt ist. Die von der akustischen Gefahrenmeldereinheit übertragene Information kann zur Steuerung der mindestens einen weiteren Einheit verwendet werden. Diese Informationen können aus Nutzdaten und/oder Signalisierungsdaten und Sequenzen und/oder Impulse einer Schallwelle bestehen. Letzteres bedeutet, dass ähnlich wie bei einem Morsecode eine Sequenz, ein Impuls, eine Sequenz/Impuls-Kombination etc. von einer weiteren Einheit bzw. von der akustischen Gefahrenmeldereinheit ausgesendet wird und beim Empfänger, die akustische Gefahrenmeldereinheit oder die weitere Einheit, in Abhängigkeit davon ein Ereignis ausgelöst wird. Dies setzt natürlich voraus, dass die Sequenz, der Impuls, die Sequenz/Impuls-Kombination für den Empfänger bekannt ist, damit er abhängig davon ein Ereignis auslösen kann. Als Ereignis kann ein optisches Signal, ein akustisches Signal, eine Sprachausgabe, eine Textausgabe, die aus alphanumerischen Zeichen besteht, etc. ausgelöst werden. Auch könnte mit Hilfe des erfindungsgemässen Verfahrens der Ort eines Senders, einer akustischen Gefahrenmeldereinheit bzw. einer weiteren Einheit, bestimmt werden. Auch eine komplexe Kommunikation zu einer Gefahrenmeldezentrale mit zum Beispiel der Übermittelung von Parametern, Signalisierungsdaten, Nutzdaten etc. für zum Beispiel die Registrierung, die Authentifizierung, Informationen betreffend den Ort des Senders etc. ist vorstellbar. Selbstverständlich könnte auch Text aus alphanumerischen Zeichen bzw. Sprachdaten übertragen werden.

Ein Vorteil des erfindungsgemässen Verfahrens bzw. der erfindungsgemässen Vorrichtung besteht darin, dass einfach und effizient eine bidirektionale Kommunikation zwischen einer akustischen Gefahrenmeldereinheit und mindestens einer weiteren Einheit hergestellt werden kann.

Die Erfindung wird anhand eines in einer Figur dargestellten Ausführungsbeispiels näher erläutert. Dabei zeigen
- Figur 1: ein Beispiel für eine Kommunikation mit einer Anzeigeneinheit,
- Figur 2: ein Beispiel für das Verfolgen einer weiteren Einheit,
- Figur 3: ein Beispiel für eine Brand-Früherkennung durch eine Temperaturmessung in einem baulich begrenzten Raum,
- Figur 4: ein Beispiel für die Bewegungsmeldung in einem baulich begrenzten Raum,
- Figur 5: eine erfindungsgemässe Vorrichtung.

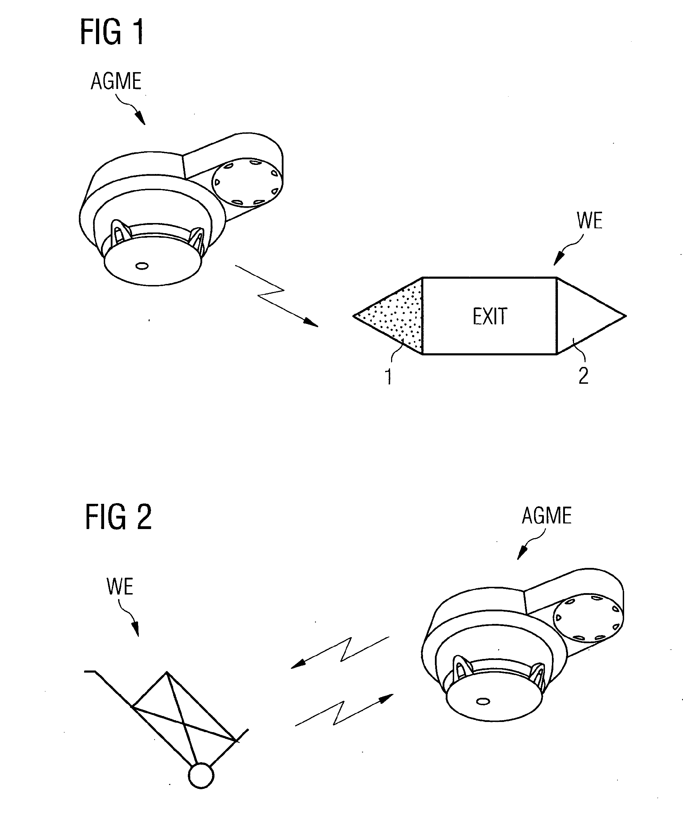

Figur 1 zeigt ein Beispiel für eine Kommunikation mit einer weiteren Einheit WE wie zum Beispiel eine Anzeigeneinheit für die Anzeige des Fluchtweges bei einem Notfall. Solche Anzeigeneinheiten WE werden auch als Evakuationsleuchten bezeichnet. Erfindungsgemäss überträgt die akustische Gefahrenmeldereinheit AGME eine Information mittels Schallwellen an die Anzeigeneinheit WE. Die Anzeigeneinheit WE löst daraufhin als Ereignis die Anzeige aus, dass der Fluchtweg in Richtung 1 verwendet werden soll. Die Evakuationsleuchte bzw. die Anzeigeneinheit WE könnte also je nach Situation die Personen auf unterschiedliche Fluchtwege einweisen. Die Kommunikation funktioniert dabei auf akustische Distanz, also in der Regel innerhalb eines baulich begrenzten Raumes.

Figur 2 zeigt ein Beispiel für das Verfolgen einer weiteren Einheit. Die weitere Einheit, hier zum Beispiel ein mobiles Gerät sendet periodisch eine eindeutige Kennung über Ultraschall. Diese Information wird entlang des Weges der weiteren Einheit WE von akustischen Gefahrenmeldereinheiten AGME empfangen und als Ereignis an eine Gefahrenmeldezentrale AGME weitergeleitet. Bei der Gefahrenmeldezentrale kann der Weg der weiteren Einheit WE dann verfolgt werden. Es kann sogar ein Alarm ausgelöst werden, wenn die weitere Einheit WE in für die weitere Einheit WE verbotenen Zonen eindringt. Stromsparender aus Sicht der weiteren Einheit WE, hier zum Beispiel ein mobiles Gerät, ist der Umkehrbetrieb: Bei Bedarf wird über alle akustischen Gefahrenmeldereinheiten AGME ein codierter Aufruf über Schall bzw. Ultraschall erlassen. Darauf hin meldet sich die angesprochene weitere Einheit mit einer Kennung. Durch den Empfang der Kennung kann die weitere Einheit bzw. die Person, die die weitere Einheit trägt, lokalisiert werden.

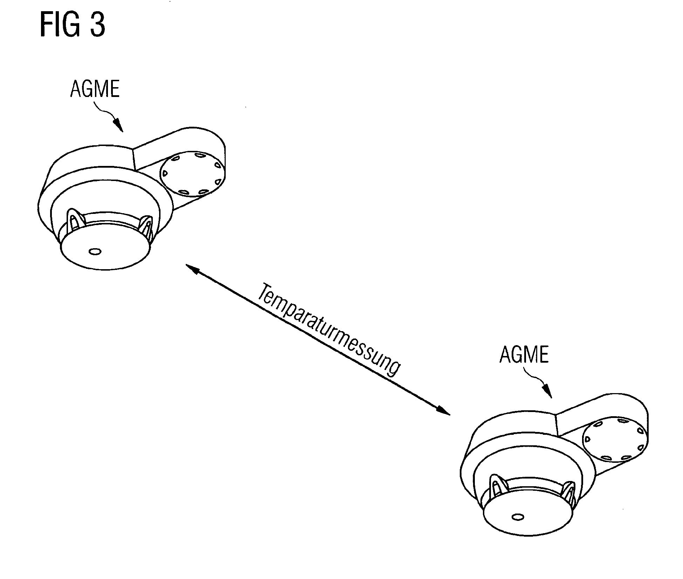

Figur 3 zeigt ein Beispiel für eine Brand-Früherkennung durch eine Temperaturmessung in einem baulich begrenzten Raum. Eine Temperaturmessung nach dem Verfahren der Schalllaufzeit hat den Vorteil, dass das Detektionssystem, also die akustische Gefahrenmeldereinheit AGME trägheitsfrei ist und gleichzeitig die Temperatur entlang einer größeren Strecke gemessen werden kann. Der TRC (Thermal Response Coefficient) kann beliebig klein gehalten werden. Die Schallgeschwindigkeit verhält sich proportional zur Wurzel der absoluten Temperatur. Ist die Distanz bekannt, kann durch eine Schalllaufzeitmessung die Temperatur entlang der Messstrecke sehr genau berechnet werden. Dabei sendet die Gefahrenmeldereinheit AGME eine Sequenz von Schallwellen aus und ermittelt aus der zurückkommenden Primärwelle die Temperatur. Die Schallgeschwindigkeit in Gasen ist innerhalb weiter Grenzen nur von der Temperatur, nicht aber vom Druck des Gases abhängt. Auch durch den Gehalt an Wasserdampf ändert sich die Schallgeschwindigkeit gegenüber trockener Luft nur unmerklich. Zur Kompensation von Luftströmungen wird im Gegentakt gemessen (sing-around = vorwärts / rückwärts Messung). Durch die Verwendung von sogenannten Chirps als Schallpaket bzw. Sequenz kann die Primärwelle besser von den Reflexionen unterschieden werden. Da der Chirp die Frequenz kontinuierlich verändert, kann die zeitliche Position besser korreliert werden und es werden auch die Streuungen bezüglich Resonanzfrequenzen der Transducer besser verkraftet.

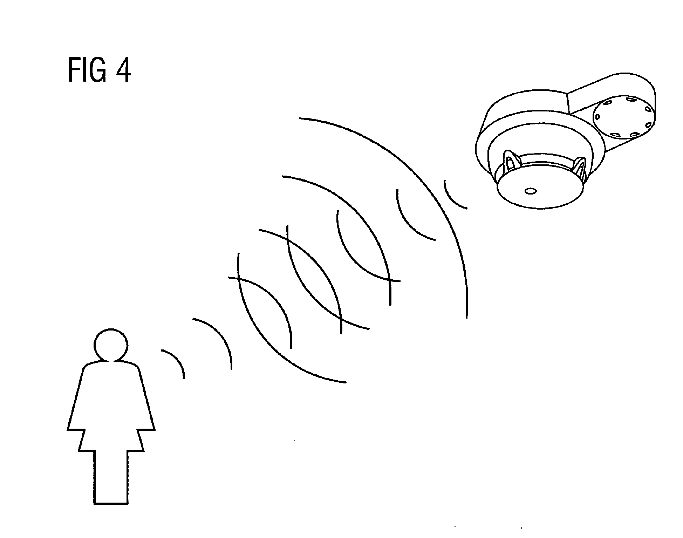

Figur 4 zeigt ein Beispiel für die Bewegungsmeldung in einem baulich begrenzten Raum. Durch Detektion der Dopplerfrequenz-Verschiebung können sich bewegende Objekte erkannt werden. Hiezu sendet die akustische Gefahrenmeldereinheit AGME Sequenzen bzw. Impulse von Schallwellen aus und bestimmt anhand der Dopplerverschiebung zwischen emittierter und reflektierter Schallwelle, ob sich ein sich bewegendes Objekt innerhalb der Abtastreichweite der akustischen Gefahrenmeldereinheit AGME befindet.

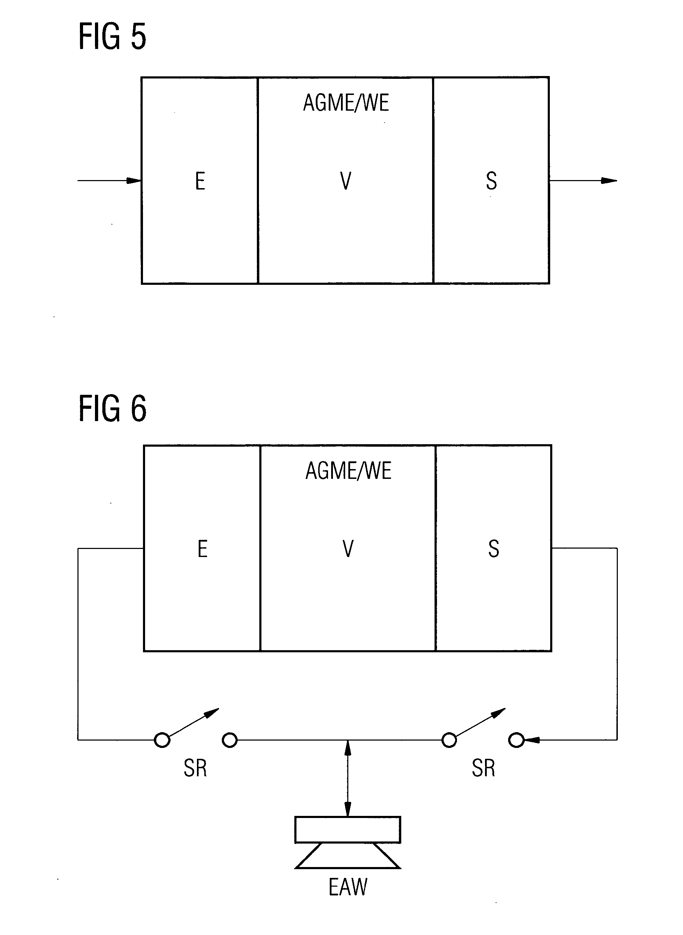

Figur 5 zeigt eine erfindungsgemässe Vorrichtung AGME/WE zum Durchführen des Verfahrens gemäß den Figuren 1 bis 4. Die Vorrichtung AGME/WE weist eine Empfangseinheit E, eine Sendeeinheit S und eine Verarbeitungseinheit V auf. Die Vorrichtung ist integriert in einer akustischen Gefahrenmeldereinheit AGME und in der mindestens einen weiteren Einheit WE.

Figur 6 zeigt die erfindungsgemässe Vorrichtung AGME/WE mit nur einem Elektro-akustischen Wandler EAW. Dies bedeutet, dass die Empfangseinheit E und die Sendeeinheit S eine physikalische Einheit bilden und der Elektro-akustische Wandler EAW sowohl als Schall-Sender als auch als Schall-Empfänger verwendet werden kann. Die Schalter SR werden dabei zum Umschalten zwischen Empfangseinheit E und Sendeeinheit S verwendet.

## Patentansprüche

1. Verfahren zur bidirektionalen Kommunikation zwischen einer akustischen Gefahrenmeldereinheit (AGME) und mindestens einer weiteren Einheit (WE) in einem baulich begrenzten Raum,
**dadurch gekennzeichnet,**
**dass** für die bidirektionale Kommunikation eine zu übertragende Information von der akustischen Gefahrenmeldereinheit (AGME) mittels Schallwellen zur mindestens einen weiteren Einheit (WE) und umgekehrt übertragen wird.

2. Verfahren nach Anspruch 1,
**dadurch gekennzeichnet,**
**dass** die von der akustischen Gefahrenmeldereinheit (AGME) übertragene Information zur Steuerung der mindestens einen weiteren Einheit (WE) verwendet wird.

3. Verfahren nach Anspruch 1,
**dadurch gekennzeichnet,**
**dass** von der akustische Gefahrenmeldereinheit (AGME) mittels der Schalllaufzeit der Schallwelle die Temperatur in dem baulich begrenzten Raum bestimmt wird.

4. Verfahren nach Anspruch 3,
**dadurch gekennzeichnet,**
**dass** zur Bestimmung der Temperatur von der akustischen Gefahrenmeldereinheit (AGME) Chirps ausgesendet werden.

5. Verfahren nach einem der vorangegangenen Ansprüche,
**dadurch gekennzeichnet,**
**dass** als Information Nutzdaten und/oder Signalisierungsdaten verwendet werden.

6. Verfahren nach einem der vorangegangenen Ansprüche,
**dadurch gekennzeichnet,**
**dass** als Information mindestens eine Sequenz und/oder mindestens ein Impuls einer Schallwelle verwendet werden.

7. Verfahren nach Anspruch 5,
**dadurch gekennzeichnet,**
**dass** abhängig von der empfangenen Sequenz und/oder Impuls bei der akustischen Gefahrenmeldereinheit (AGME) und/oder der weiteren Einheit (WE) ein Ereignis ausgelöst wird.

8. Verfahren nach Anspruch 6,
**dadurch gekennzeichnet,**
**dass** als Ereignis ein akustisches Signal, eine Sprachausgabe, eine Textausgabe und/oder ein optisches Signal ausgelöst werden.

9. Verfahren nach Anspruch 6,
**dadurch gekennzeichnet,**
**dass** als Ereignis die Ortsbestimmung des die Sequenz und/oder Impuls sendende akustische Gefahrenmeldereinheit (AGME) und/oder weitere Einheit (WE) ausgelöst wird.

10. Verfahren nach einem der vorangegangenen Ansprüche,
**dadurch gekennzeichnet,**
**dass** Schallwellen im Ultraschall-Bereich verwendet werden.

11. Verfahren nach einem der vorangegangenen Ansprüche,
**dadurch gekennzeichnet,**
**dass** als die mindestens eine weitere Einheit (WE) ein Kommunikationsendgerät, ein mobiles Kommunikationsendgerät, eine akustische Gefahrenmeldereinheit (AGME), ein Lautsprecher, eine Gefahrenmeldeeinheit, ein mobiler Schallwellensender und/oder Schallwellenempfänger, eine Gefahrenmeldezentrale und/oder eine optische Anzeigeneinheit verwendet werden.

12. Vorrichtung zur bidirektionalen Kommunikation zwischen einer akustischen Gefahrenmeldereinheit (AGME) und mindestens einer weiteren Einheit (WE) in einem baulich begrenzten Raum,
- mit einer Empfangseinheit (E) und einer Sendeeinheit (S) zur Durchführung der bidirektionalen Kommunikation,
- mit einer Verarbeitungseinheit (V) zum Übertragen einer Information mittels Schallwellen zwischen der akustischen Gefahrenmeldereinheit (AGME) und der mindestens einen weiteren Einheit (WE).

13. Vorrichtung nach Anspruch 12,
**dadurch gekennzeichnet,**
**dass** die Vorrichtung in der akustischen Gefahrenmeldereinheit (AGME) und/oder in der mindestens einen weiteren Einheit (WE) integriert ist.

14. Vorrichtung nach Anspruch 12 und 13,
**dadurch gekennzeichnet,**
**dass** ein Elektro-akustischer Wandler (EAW) als Sendeeinheit (S) und als Empfangseinheit (E) vorgesehen ist.

15. System zur bidirektionalen Kommunikation zwischen einer akustischen Gefahrenmeldereinheit (AGME) und mindestens einer weiteren Einheit (WE) in einem baulich begrenzten Raum,
- mit einer akustischen Gefahrenmeldereinheit (AGME) zum Senden einer Information mittels Schallwellen an mindestens eine weitere Einheit (WE),
- mit mindestens einer weiteren Einheit (WE) zum Empfangen der von der akustischen Gefahrenmeldereinheit (AGME) gesendeten Information und zum Auslösen eines Ereignisses abhängig von der empfangenen Information.
